# EUROPEAN PATENT APPLICATION

(11) **EP 3 501 930 A1**
(43) Date of publication of application: **26.06.2019**
(21) Application number: 18202528.8
(22) Date of filing: 25.10.2018
(51) Int. Cl.: B60W 30/14, G06K 9/00, G01C 21/34, B60W 30/12

(54) **METHOD AND APPARATUS WITH VEHICULAR LONGITUDINAL VELOCITY CONTROL**

(30) Priority: 18.12.2017 KR 20170173923
(71) Applicant: Samsung Electronics Co., Ltd., Gyeonggi-do 16677 (KR)
(72) Inventor: LEE, Jaewoo, 16678 Gyeonggi-do (KR); KOO, Jahoo, 16678 Gyeonggi-do (KR); LEE, Dongwook, 16678 Gyeonggi-do (KR); LEE, Wonju, 16678 Gyeonggi-do (KR); JI, Dae Hyun, 16678 Gyeonggi-do (KR)
(74) Representative: Grootscholten, Johannes A.M.

(57) **Abstract**

Provided is a method and apparatus to control a longitudinal velocity of a target vehicle. The method and apparatus may determine a region of travel of the target vehicle based on a plurality of driving waypoints obtained from a map database, and control an adjusting of a longitudinal velocity of the target vehicle based on a distance of the target vehicle to a preceding object in the determined region of travel.

## Description

### CROSS-REFERENCE TO RELATED APPLICATIONS

### BACKGROUND

### 1. Field

The following description relates to a method and apparatus with vehicular longitudinal velocity control.

### 2. Description of Related Art

Active cruise control (ACC) technology is essential for autonomous driving, for example, an advanced driver assistance system (ADAS). The ACC technology is technology that senses a velocity of a preceding vehicle within a lane on which a current vehicle is currently travelling, and adjusts a velocity of the vehicle such that the vehicle maintains a predetermined distance to the preceding vehicle, thereby preventing a collision.

Some vehicles currently on the market include a function that allows a target vehicle to travel at a desired target velocity being in a case in which a preceding vehicle is absent, and to reduce speed based on a velocity of a preceding vehicle to maintain a predetermined distance with the preceding vehicle if the preceding vehicle appears in front of the target vehicle.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a processor-implemented method to control a longitudinal velocity of a target vehicle, includes determining a region of travel of the target vehicle based on a plurality of driving waypoints obtained from a map database, and controlling an adjusting of a longitudinal velocity of the target vehicle based on a distance of the target vehicle to a preceding object in the determined region of travel. For example, the method can estimate a distance to a preceding object in view of the alignment of the road accurately, thereby safely controll a longitudinal velocity of the vehicle. Also, the method can stably detect a region of travel with respect to various weather environments and road alignments, by mixing the camera-based lane line detection and lane line detection based on waypoints of map data.

The calculating may include obtaining lane information and a plurality of center waypoints from the map database, and determining the driving waypoints based on the lane information and the plurality of center waypoints.

The controlling of the adjusting may include controlling the adjusting of the longitudinal velocity of the target vehicle based on information related to the distance of the target vehicle to the preceding object, a velocity of the preceding object, and an acceleration of the preceding object.

The calculating may include determining the region of travel based on a driving plan.

The determining may include determining the region of travel to be a region that corresponds to a lane in which the target vehicle is currently travelling, and a region that corresponds to a lane that the vehicle is heading for based on the driving plan.

The determining may include determining a region that corresponds to a lane in which the target vehicle is currently travelling to be the region of travel.

The adjusting may include adjusting the longitudinal velocity of the target vehicle based on a distance of the target vehicle to a preceding object adjacent to the target vehicle, among a plurality of preceding objects, when the plurality of preceding objects are in the region of travel.

The calculating may include interpolating a plurality of center waypoints obtained from the map database.

The calculating may include determining a region of travel that corresponds to a driving plan based on the plurality of driving waypoints in an intersection region, in response to the target vehicle passing the interaction region based on the driving plan.

The calculating may include determining the region of travel based on a front-view image of the target vehicle with respect to a region within a predetermined distance from the target vehicle, and determining the region of travel based on the plurality of driving waypoints with respect to a region beyond a predetermined distance from the vehicle.

The velocity of the vehicle may be adjusted based on the controlling of the adjusting of the longitudinal velocity.

In another general aspect, an apparatus to control a longitudinal velocity of a vehicle includes a memory configured to store a map database, and a processor configured to determine a region of travel of the target vehicle based on a plurality of driving waypoints obtained from the map database, and control an adjusting of a longitudinal velocity of the target vehicle based on a distance of the target vehicle to a preceding object in the determined region of travel.

The processor may be configured to obtain lane information and a plurality of center waypoints from the map database, and determine the driving waypoints based on the lane information and the plurality of center waypoints.

The processor may be configured to control the adjusting of the longitudinal velocity of the target vehicle based on information related to the distance of the target vehicle to the preceding object, a velocity of the preceding object, and an acceleration of the preceding object.

The processor may be configured to determine the region of travel based on a driving plan.

The processor may be configured to determine the region of travel to be a region that corresponds to a lane in which the target vehicle is currently travelling and a region that corresponds to a lane that the vehicle is heading for based on the driving plan.

The processor may be configured to determine a region that corresponds to a lane in which the target vehicle is currently travelling to be the region of travel.

The processor may be configured to adjust the longitudinal velocity of the target vehicle based on a distance of the target vehicle to a preceding object adjacent to the target vehicle, among a plurality of preceding objects, when the plurality of preceding objects are in the region of travel.

The processor may be configured to interpolate a plurality of center waypoints obtained from the map database.

The processor may be configured to determine a region of travel that corresponds to a driving plan based on the plurality of driving waypoints in an intersection region, in response to the target vehicle passing the interaction region based on the driving plan.

The apparatus may be the vehicle, and the apparatus may further include an accelerometer configured to adjust the longitudinal velocity based on an adjustment of the distance of the target vehicle to the preceding object in the region of travel.

In another general aspect, a processor-implemented method of controlling a longitudinal velocity of a target vehicle includes extracting a plurality of center waypoints from a map database, determining a curved region of travel of the target vehicle based on the extracted plurality of center waypoints, detecting a presence of a preceding vehicle within a region of the plurality of center waypoints, and controlling a longitudinal velocity of the target vehicle based on a determined distance between the target vehicle and the detected preceding vehicle.

The plurality of center waypoints may represent a center line of the determined region as a predetermined lane of travel of the target vehicle.

The determined region of travel may be a region of a predetermined radius around each of the plurality of center waypoints.

The predetermined radius may correspond to a width of the determined region of travel of the target vehicle.

Other features and aspects will be apparent from the following detailed description, the drawings, and the claims.

### BRIEF DESCRIPTION OF THE DRAWINGS

FIGS. 1A and 1B illustrate examples of controlling a longitudinal velocity of a vehicle.
FIG. 2 is a flowchart illustrating an example of a method to control a longitudinal velocity of a vehicle.
FIG. 3 illustrates an example of waypoints.
FIG. 4 illustrates an example of obtaining driving waypoints.
FIGS. 5 and 6 illustrate examples of extracting driving waypoints.
FIG. 7 illustrates an example of a region of travel on a straight road.
FIG. 8 illustrates an example of a region of travel on a curved road.
FIG. 9 illustrates an example of detecting a preceding object.
FIG. 10 illustrates an example of detecting a preceding object in a region of travel.
FIG. 11 illustrates an example of detecting a preceding object within a region of travel based on a driving plan.
FIG. 12 illustrates an example of determining a region of travel at an intersection and detecting a preceding object.
FIG. 13 illustrates an example of detecting a preceding object based on driving waypoints and a front-view image analysis.
FIGS. 14 through 16 are block diagrams illustrating examples of configurations of devices to control a longitudinal velocity of a vehicle.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness

Various alterations and modifications may be made to the examples. Here, the examples are not construed as limited to the disclosure and should be understood to include all changes, equivalents, and replacements within the idea and the technical scope of the disclosure.

The terminology used herein is for the purpose of describing particular examples only and is not to be limiting of the examples. As used herein, the singular forms "a", "an", and "the" are intended to include the plural forms as well, unless the context clearly indicates otherwise. It will be further understood that the terms "include/comprise" and/or "have" when used in this specification, specify the presence of stated features, integers, operations, elements, components, and/or combinations thereof, but do not preclude the presence or addition of one or more other features, numbers, operations, elements, components, and/or groups thereof.

Unless otherwise defined, all terms including technical and scientific terms used herein have the same meaning as commonly understood by one of ordinary skill in the art to which examples belong after an understanding of the disclosure of this application. It will be further understood that terms, such as those defined in commonly-used dictionaries, should be interpreted as having a meaning that is consistent with their meaning in the context of the relevant art and the disclosure of this application and will not be interpreted in an idealized or overly formal sense unless expressly so defined herein.

When describing the examples with reference to the accompanying drawings, like reference numerals refer to like constituent elements and a repeated description related thereto will be omitted. When it is determined detailed description related to a related known function or configuration they may make the purpose of the examples unnecessarily ambiguous in describing the examples, the detailed description will be omitted here.

In addition, terms such as first, second, A, B, (a), (b), and the like may be used herein to describe components. Each of these terminologies is not used to define an essence, order, or sequence of a corresponding component but used merely to distinguish the corresponding component from other component(s).

It is noted that use of the term "may" with respect to an example or embodiment, e.g., as to what an example or embodiment may include or implement, means that at least one example or embodiment exists where such a feature is included or implemented while all examples and embodiments are not limited thereto.

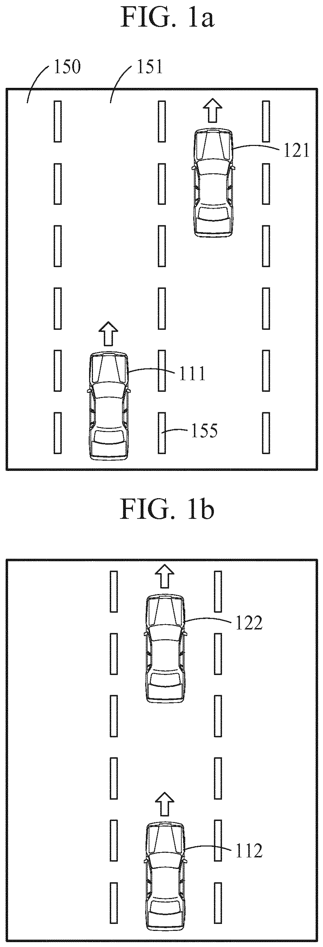

FIGS. 1A and 1B illustrate examples of controlling a longitudinal velocity of a vehicle.

Referring to FIGS. 1A and 1B, a device to control a longitudinal velocity of a vehicle is mounted on a vehicle 111, 112 to control a longitudinal velocity of the vehicle 111, 112. The vehicle 111, 112 travels on a road 150 including a plurality of lanes or paths 151. The lanes 151 may be straight or curvilinear or meandering. The device to control a longitudinal velocity of a vehicle controls the velocity of the vehicle 111, 112 based on a traffic condition of the road 150. The device to control a longitudinal velocity of a vehicle adjusts a longitudinal or forward velocity or acceleration of a vehicle 111, 112, thereby allowing the vehicle 111, 112 to maintain a distance to an object, for example, another vehicle 121, 122 that precedes the vehicle 111, 112, thus preventing a collision.

As an example, the velocity or acceleration of the target vehicle 111, 112 may be controlled by an accelerometer. The accelerometer may measure and control a longitudinal acceleration of the vehicle 111, which is a rate of change in velocity or speed of the vehicle 111, and control the speed of the car based on the measured acceleration. The accelerometer may adjust or change the acceleration of the target vehicle 111, 112 based on a determination of a change in distance between the target vehicle 111, 112 and the preceding vehicle 122, 122.

Herein, the longitudinal velocity of the vehicle may refer to a velocity corresponding to a direction in which the vehicle proceeds, and may correspond to, for example, a longitudinal direction of a road or a lane.

Further, a lane line 155 refers to a boundary line that distinguishes the lanes. A driving lane 151 refers to a lane on which the vehicle 111, 112 or the vehicle 121, 122 is currently travelling.

The device to control a longitudinal velocity of a vehicle may determine a region to detect a preceding object 121, 122 in order to control the velocity of the vehicle 111, 112 based on traffic conditions of the road 150. In an example in which the vehicle 111 proceeds straight or in a forward direction, the device to control a longitudinal velocity or acceleration of a vehicle may ignore another vehicle 121 in a traffic situation as shown in FIG. 1A. Specifically, if the vehicle 121 that precedes or is in front of vehicle 111 is not in a same lane 151 as vehicle 111, the device to control a longitudinal velocity of a vehicle may ignore vehicle 121. Additionally, in an example, if the lane ahead of the vehicle 111 is curved, and vehicle 121 is ahead of vehicle 111, but beyond the curve, vehicle 111 may ignore vehicle 121 in this instance. However, in a traffic situation as shown in FIG. 1B, where vehicle 122 is in a same lane as vehicle 112, the device to control a longitudinal velocity of a vehicle controls the velocity of the vehicle 112 based on a velocity of vehicle 122.

Hereinafter, an operation of the device to control a longitudinal velocity of a vehicle will be described.

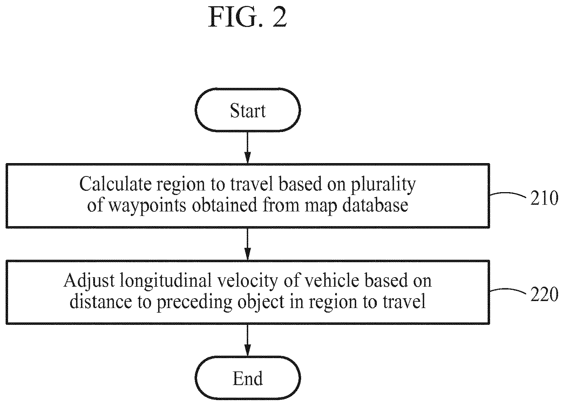

FIG. 2 is a flowchart illustrating an example of a method to control a longitudinal velocity of a vehicle.

Referring to FIG. 2, in operation 210, a device to control a longitudinal velocity of a vehicle calculates a region of travel based on a plurality of driving waypoints obtained from a map database.

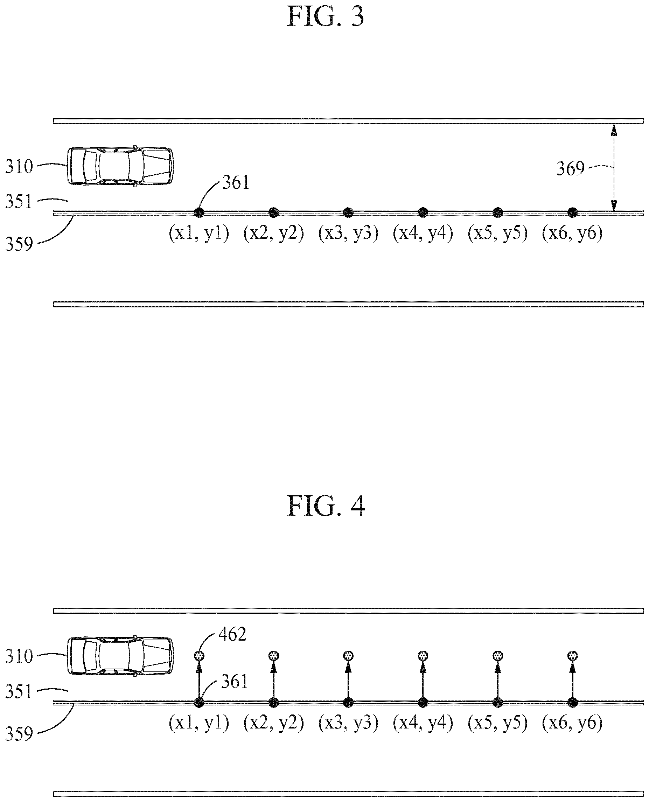

Herein, the map database refers to a database that stores map data. The map data is geographical information related to a predetermined position. For example, in a non-limiting example, the map data indicates waypoints of a road, the number of lanes of the road, and a width of each lane of the road. The waypoints are points designated at predetermined intervals along an alignment of the road. As a non-limiting example, the waypoints may be formed in a straight lane or in a curvilinear lane. A curvilinear lane may be a lane that is bounded or represented by curved or meandering lines or boundaries. The curvilinear lane may flow from a straight projectory into a curved boundary or lane lines. When forming a virtual line by connecting a plurality of waypoints, the virtual line corresponds to a path along which the vehicle is to travel. The waypoints will be described further with reference to FIGS. 3 and 4.

For example, the device to control a longitudinal velocity of a vehicle obtains the waypoints included in the map data based on position information of the vehicle, and calculates the region of travel of the vehicle based on the obtained waypoints. As the map database has a high definition (HD), the map data includes high-density waypoints, and includes waypoints with respect to all the lanes of the road. The HD map data includes driving waypoints indicating a center of each lane of the road, for example, 4 lines of waypoints in an example of a 4-lane road. However, examples are not limited thereto. In an example in which the map database has a standard definition (SD), the map data includes only waypoints with respect to a center line of the road, for example, a single line of waypoints in an example of a 4-lane road.

In an example, if the HD map database is available, the device to control a longitudinal velocity of a vehicle uses, without performing an additional calculation, driving waypoints indicating a center of each lane, included in the corresponding map database. However, in an example where the SD map database is accessed, the device to control a longitudinal velocity of a vehicle generates driving waypoints indicating a center of each lane based on the center waypoints included in the corresponding map database, and uses the generated driving waypoints.

The region of travel is a region of a road on which the target vehicle, on which the device to control a longitudinal velocity of a vehicle is mounted, will travel. In an example in which the vehicle proceeds straight or in a forward direction, the region of travel is a region corresponding to a driving lane on which the vehicle is currently travelling. In another example, if the vehicle changes lanes, the region of travel includes a region corresponding to the previous driving lane and a region corresponding to the new driving lane. The device to control a longitudinal velocity of a vehicle detects a preceding object only in the region of travel, thereby excluding other objects unrelated to the current longitudinal travel of the vehicle from longitudinal control.

In operation 220, the device to control a longitudinal velocity of a target vehicle adjusts a longitudinal velocity of the target vehicle based on a distance to a preceding object in the region of travel. The device to control a longitudinal velocity of a target vehicle restricts the velocity of the target vehicle to be less than or equal to a velocity of the preceding object. However, examples are not limited thereto. In response to a distance between the target vehicle and the preceding object being less than a predetermined threshold distance, the device to control a longitudinal velocity of a target vehicle adjusts the velocity of the target vehicle to be less than the velocity of the preceding object, thereby increasing the distance between the target vehicle and the preceding object.

FIG. 3 illustrates an example of waypoints.

Referring to FIG. 3, a vehicle 310, on which a device to control a longitudinal velocity of a vehicle is mounted, travels on a road. As described above, the road includes a lane 351 defined by lane lines. The lane 351 on which the vehicle 310 is currently travelling is referred to as a driving lane.

Map data includes lane information and a plurality of waypoints 361.

For example, the waypoints 361 included in the map data are points designated at predetermined intervals along a center line 359 of the road. In FIG. 3, the waypoints 361 are defined by two-dimensional (2D) coordinates such as (x1, y1), (x2, y2) through (x6, y6). However, examples are not limited thereto. x1 through x6 denote x-axial position values of the waypoints 361, and y1 through y6 denote y-axial position values of the waypoints 361. The waypoints 361 of FIG. 3 indicate the center line 359, and thus are also referred to as center waypoints.

The lane information includes information such as the number of lanes of the road, and a width 369 of each lane.

FIG. 4 illustrates an example of obtaining driving waypoints.

Referring to FIG. 4, the device to control a longitudinal velocity of a vehicle obtains the lane information and the plurality of center waypoints 361 from a map database. The device to control a longitudinal velocity of a vehicle obtains the lane information and the plurality of center waypoints 361 of the road in a vicinity of a current position of the vehicle 310.

The device to control a longitudinal velocity of a vehicle determines driving waypoints 462 based on the lane information and the center waypoints 361. The driving waypoints 462 are points that the vehicle 310 is expected to pass when travelling. The device to control a longitudinal velocity of a vehicle generates the driving waypoints 462 by adding an offset to the center waypoints 361 based on the lane information.

For example, the device to control a longitudinal velocity of a vehicle determines a position difference between the vehicle 310 and a center waypoint 361 closest to the vehicle 310 to be the offset, and adds the corresponding position difference to the plurality of center waypoints 361, thereby generating the plurality of driving waypoints 462. In this example, the device to control a longitudinal velocity of a vehicle assumes that the vehicle 310 is currently travelling while maintaining a lateral position on the lane 351. However, examples are not limited thereto. The device to control a longitudinal velocity of a vehicle determines a length corresponding to a half the width of the lane 351 to be the offset, and adds the corresponding length to the plurality of center waypoints 361, thereby generating the plurality of driving waypoints 462. Here, the width of the lane 351 is included in the lane information. However, examples are not limited thereto. The device to control a longitudinal velocity of a vehicle estimates the width of the lane 351 by analyzing a front-view image of the vehicle 310.

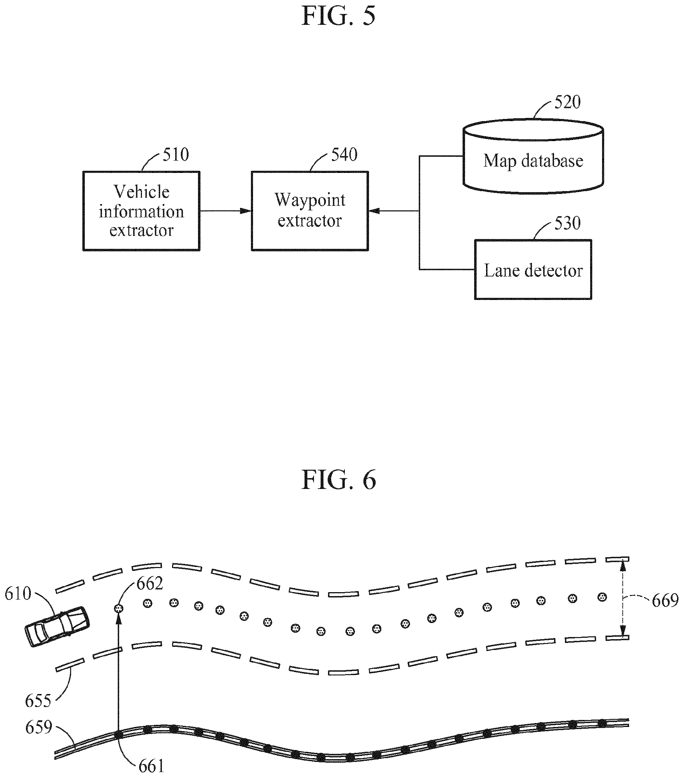

FIGS. 5 and 6 illustrate an example of extracting driving waypoints.

FIG. 5 illustrates examples of devices configured to extract driving waypoints. The vehicle information extractor 510, the waypoint extractor 540, and the lane detector 530 of FIG. 5 may be implemented by software modules, hardware modules, or combinations thereof.

The vehicle information extractor 510 extracts information related to a target vehicle on which a device to control a longitudinal velocity of a vehicle is mounted. The vehicle information extractor 510 extracts, as vehicle information, position coordinates at which the target vehicle is currently travelling and a heading angle of the vehicle. The vehicle information extractor 510 determines the position coordinates of the target vehicle based on global positioning system (GPS) signals. The vehicle information extractor 510 determines the heading angle of the vehicle based on a handle steering state of the vehicle.

A map database 520 is a database that stores map data, as described above. The map database 520 is included in the device to control a longitudinal velocity of a vehicle. However, examples are not limited thereto. The map database 520 may be stored in an additional external storage device connected to the device to control a longitudinal velocity of a vehicle using a wire or wirelessly. For example, the map database 520 stores, as the map data, lane information related to predetermined coordinates and a plurality of waypoints in a predetermined region. In the examples of FIGS. 3 and 4, the map database 520 stores center waypoints aligned along a center line of each road as the map data.

The lane detector 530 detects a width of a lane and an offset. The device to control a longitudinal velocity of a vehicle estimates the width of the lane on which the target vehicle is currently travelling by analyzing a front-view image of the vehicle. Further, the device to control a longitudinal velocity of a vehicle determines the offset based on the estimated width of the vehicle. The device to control a longitudinal velocity of a vehicle adds the determined offset to the center waypoints, thereby generating driving points, as described in FIG. 4.

A waypoint extractor 540 extracts waypoints included in the map data based on position information of the vehicle. The waypoint extractor 540 extracts a waypoint corresponding to a current position from the map database 520.

FIG. 6 illustrates only two lanes of a road, and a vehicle 610 travelling on a predetermined lane. The device to control a longitudinal velocity of a vehicle estimates lane information including a width 669 of the driving lane on which the vehicle 610 is currently travelling and a position of the driving lane from a center line 659 based on an analysis on a front-view image of the vehicle 610. The device to control a longitudinal velocity of a vehicle determines an offset based on the estimated lane information, and adds the determined offset to center waypoints 661, thereby generating driving waypoints 662. The vehicle 610 proceeding straight or in a forward direction is driven along the driving waypoints 662 so that the vehicle 610 does not cross a lane line 655 of the driving lane.

As shown in FIG. 6, the device to control a longitudinal velocity of a vehicle generates the driving waypoints 662 based on the center waypoints 661 included in the map database, with respect to a road that has a complex alignment, thereby accurately estimating a path along which the vehicle 610 is expected to travel. Thus, the device to control a longitudinal velocity of a vehicle accurately estimates a distance to a preceding object in view of the alignment of the road, thereby safely controlling a longitudinal velocity of the vehicle.

In an example in which the map database is a SD map database, the map data may include only center waypoints corresponding to a center line of an entire road, and driving waypoints are obtained by adding a lateral offset between a current position of the vehicle and the center line to the center waypoints through an analysis on the front-view image of the vehicle. Thus, the device to control a longitudinal velocity of a vehicle obtains the driving waypoints of a level corresponding to that of an HD map database, using the SD map database.

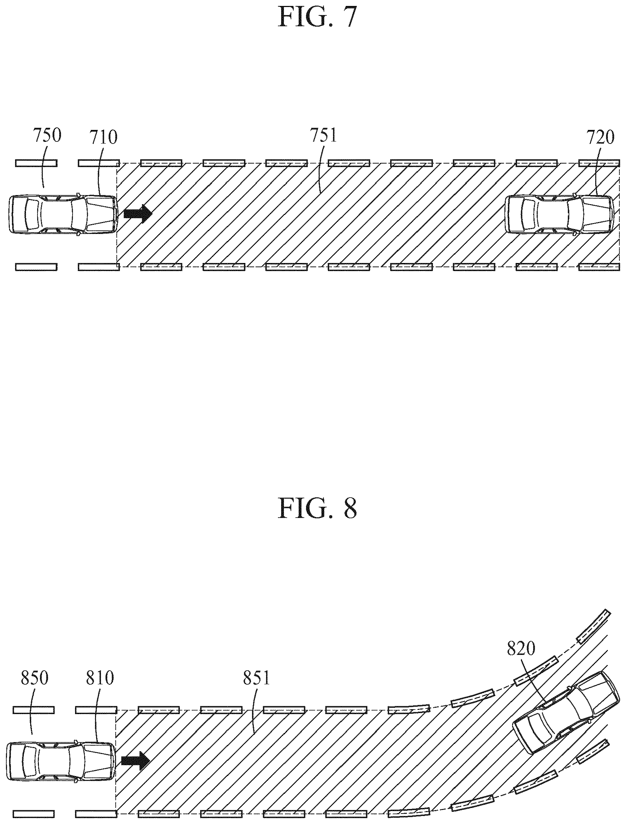

FIG. 7 illustrates an example of a region of travel on a straight road.

In controlling a longitudinal velocity of a target vehicle on a road including a plurality of lanes, it is important to set a longitudinal velocity of a target vehicle 710 in view of a preceding object 720 among a number of preceding objects currently in front of the target vehicle 710.

Referring to FIG. 7, a device to control a longitudinal velocity of a vehicle accurately determines a region of travel 751 that conforms to a straight road 750 to detect the preceding object 720. Thus, the device to control a longitudinal velocity of a vehicle detects the preceding object 720 in the region of travel 751, and adjusts a longitudinal velocity of the target vehicle 710 in view of the preceding object 720 currently in front of the vehicle 710 on the same lane.

For example, the device to control a longitudinal velocity of a vehicle determines the region of travel 751 by extending a region having a lateral length corresponding to a width of the corresponding lane in a direction in which driving waypoints are arranged, based on the driving waypoints obtained from a map database (520, FIG. 5). Thus, a region within two lane lines of the straight road 750 may be determined to be the region of travel 751.

FIG. 8 illustrates an example of a region of travel on a curved road.

A device to control a longitudinal velocity of a vehicle accurately determines a region of travel 851 that conforms to a curved road 850.

For example, the device to control a longitudinal velocity of a vehicle determines the region of travel 851 by extending a region having a lateral length corresponding to a width of a corresponding lane in a direction in which driving waypoints are arranged, based on the driving waypoints obtained from a map database. Thus, a region within two lane lines of the curved road 850 may be determined to be the region of travel 851.

In particular, in an example where a lane is detected through a lane extracting algorithm based on a front-view image, a lateral error may increase as a distance from the vehicle 810 increases. However, the device to control a longitudinal velocity of a vehicle accurately determines the region of travel 851 based on the driving waypoints, with respect to a current position away from the vehicle 810.

It may be difficult to perform second- or third-order polynomial lane fitting with respect to a winding road frequently seen when driving in a downtown or city environment. However, the device to control a longitudinal velocity of a vehicle may stably determine the region of travel 851 in the downtown or city environment as well. Thus, the device to control a longitudinal velocity of a vehicle may prevents a risk of misrecognizing a preceding object 820 as an object to control a longitudinal velocity of the vehicle 810, and reduces a collision possibility.

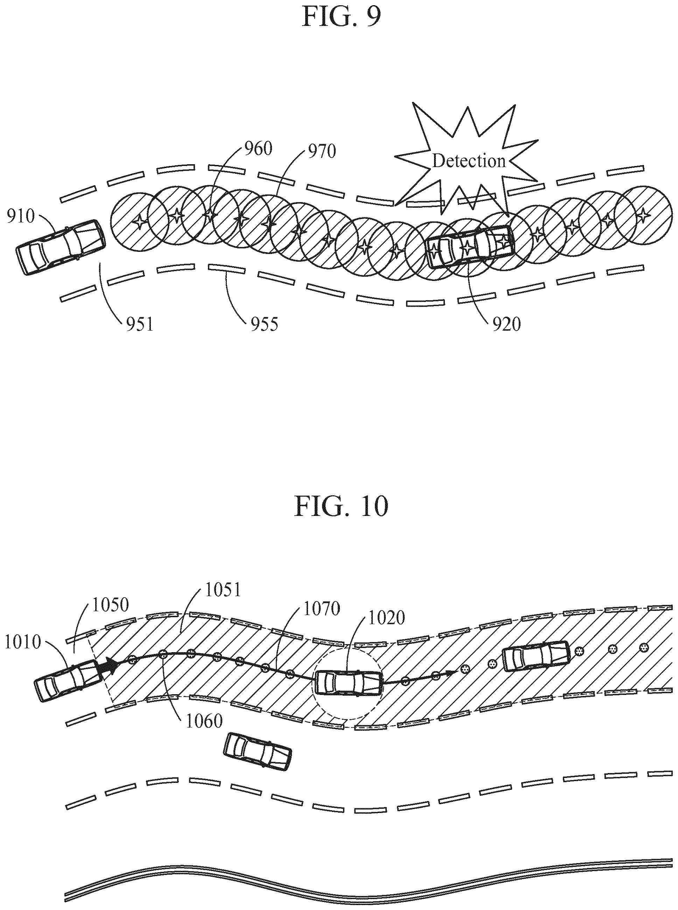

FIG. 9 illustrates an example of detecting a preceding object.

In the example of FIG. 9, the device to control a longitudinal velocity of a vehicle determines a region of travel based on a width of a lane 951 obtained from lane information of a map database or an analysis on a lane in a front-view image. However, examples are not limited thereto.

For example, from map data, for example, an HD map, including center waypoints with respect to a center line of each road and position information of a vehicle 910, the device to control a longitudinal velocity of a vehicle extracts driving waypoints 960 with respect to a direction in which the vehicle 910 travels.

The device to control a longitudinal velocity of a vehicle determines the region of travel based on each of the plurality of driving waypoints 960. For example, the device to control a longitudinal velocity of a vehicle obtains coordinate information of each driving waypoint 960 and information related to a width of the driving lane 951 on which the vehicle 910 is currently positioned. The width of the driving lane 951 is a distance between two lane lines 955 defining the corresponding lane. The device to control a longitudinal velocity of a vehicle determines, to be the region of travel, a circular region 970 with a radius corresponding to a half the width of the lane around each driving waypoint 960. The device to control a longitudinal velocity of a vehicle detects whether a preceding object 920 exists in each circular region 970 corresponding to each of the plurality of driving waypoints 960.

Although FIG. 9 illustrates the region of travel including circular regions around the driving waypoints, examples are not limited thereto. The region of travel may include various regions such as a triangular region, a rectangular region, and a polygonal region defined based on each driving waypoint.

As shown in FIG. 9, irrespective of an alignment of the road, the device to control a longitudinal velocity of a vehicle stably detects a preceding object 920 in the region of travel including the circular regions 970 determined around the driving waypoints 960.

FIG. 10 illustrates an example of detecting a preceding object in a region of travel.

Referring to FIG. 10, a device to control a longitudinal velocity of a vehicle determines, to be a region of travel 1051, a region corresponding to a driving lane 1050 on which a vehicle 1010 is currently travelling. In an example in which the vehicle 1010 is travelling straight or in a forward direction, the device to control a longitudinal velocity of a vehicle extracts driving waypoints 1060 corresponding to the driving lane 1050 from center waypoints (not shown). The device to control a longitudinal velocity of a vehicle determines the region of travel 1051 that conforms to the driving lane 1050 defined by lane lines based on the driving waypoints 1060, as shown in FIG. 10.

Here, in the example of FIG. 10, it is assumed that a driving plan 1070 of the vehicle 1010 is a straight advance in the driving lane 1050. As a non-limiting example, the driving plan 1070 is a plan indicating a direction in which the target vehicle 1010 is to proceed, a velocity of the target vehicle 1010, and a position of the target vehicle 1010 after a present time, and includes, for example, a straight advance, a lane change, a left turn, a right turn, and a stop. In an example of an autonomous vehicle, the vehicle 1010 travels while maintaining the driving lane 1050, using a lane keeping assist system (LKAS) function. When the LKAS function is activated, the device to control a longitudinal velocity of a vehicle identifies the driving plan 1070 as a plan to maintain a driving lane.

In response to a plurality of preceding objects 1020 existing in the region of travel 1051, the device to control a longitudinal velocity of a vehicle adjusts the longitudinal velocity of the target vehicle 1010 based on a distance to a preceding object 1020 most adjacent to the vehicle 1010, among the plurality of preceding objects 1020. In the example of FIG. 10, the device to control a longitudinal velocity of a vehicle selects a more adjacent preceding object 1020 from two preceding objects in the region of travel 1051. The device to control a longitudinal velocity of a vehicle may restrict the velocity of the target vehicle 1010 to be less than or equal to a velocity of the selected preceding object 1020, or restricts the velocity of the target vehicle 1010 such that the distance to the preceding object 1020 is greater than or equal to a threshold distance.

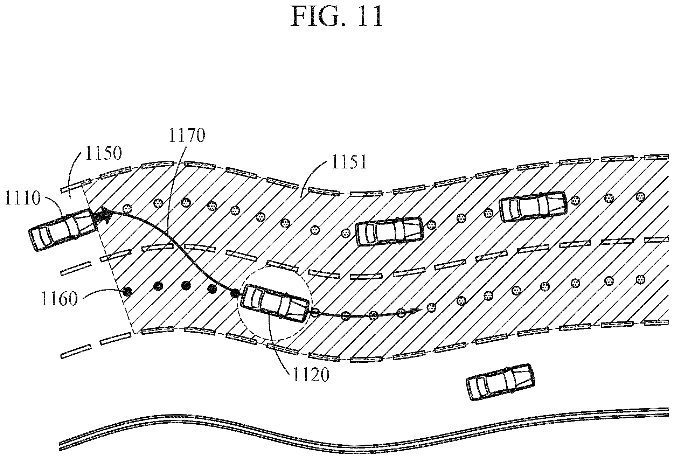

FIG. 11 illustrates an example of detecting a preceding object within a region of travel based on a driving plan. Referring to FIG. 11, a device to control a longitudinal velocity of a vehicle determines a region of travel 1151 based on a driving plan 1170. For example, the driving plan 1170 of a vehicle 1110 is a lane change.

The device to control a longitudinal velocity of a vehicle identifies the driving plan 1170 based on vehicle information. In an example in which a heading angle of the vehicle 1110 points to a lane other than a driving lane 1150 on which the vehicle 1110 is currently travelling, the device to control a longitudinal velocity of a vehicle identifies the driving plan 1170 as a lane change. However, examples are not limited thereto. In an example, the device to control a longitudinal velocity of a vehicle may identify the driving plan 1170 as a lane change, in response to an operation of a left turn signal or a right turn signal by the target vehicle 1110. For example, the device to control a longitudinal velocity of a vehicle determines, in the region of travel 1151, a region corresponding to the driving lane 1150 and a region corresponding to a lane that the vehicle 1110 is headed based on the driving plan 1170. As shown in FIG. 11, the device to control a longitudinal velocity of a vehicle determines, to be the region of travel 1151, the driving lane 1150 and a lane adjacent to the driving lane 1150 that may be a target for a lane change. As described above, the device to control a longitudinal velocity of a vehicle determines the region of travel 1151 based on driving waypoints 1160 corresponding to the driving lane 1150 and driving waypoints 1160 corresponding to the lane adjacent to the driving lane 1150 that may be a target for a lane change.

The device to control a longitudinal velocity of a vehicle detects a preceding object in the region of travel 1151, and adjusts a longitudinal velocity of the target vehicle 1110 based on information related to a distance to the preceding object, a velocity of the preceding object, and an acceleration of the preceding object. For example, the device to control a longitudinal velocity of a vehicle selects a preceding object 1120 most adjacent to the vehicle 1110 in the region of travel 1151, and adjusts the velocity of the vehicle 1110 based on a velocity of the selected preceding object 1120, a distance to the preceding object 1120, and a position of the preceding object 1120.

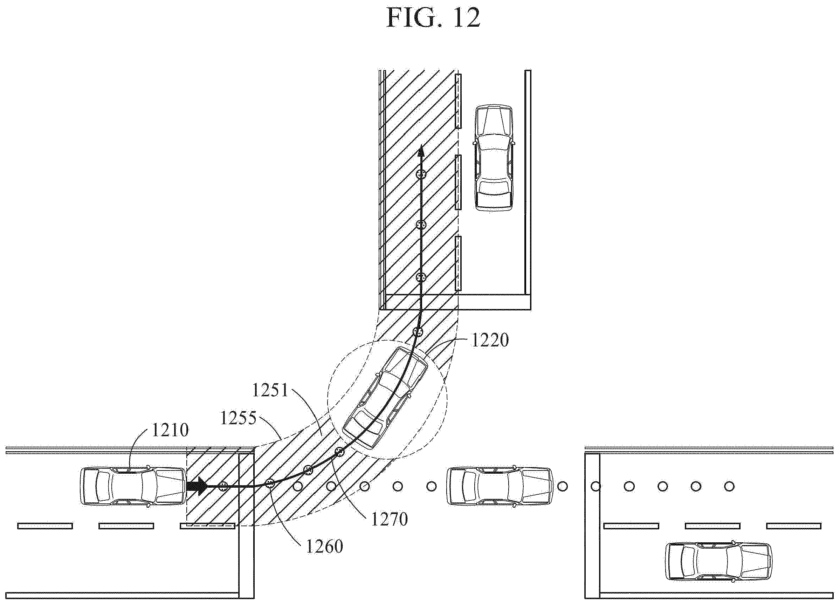

FIG. 12 illustrates an example of determining a region of travel at an intersection and detecting a preceding object.

Referring to FIG. 12, a device to control a longitudinal velocity of a vehicle determines a region of travel 1251 corresponding to a driving plan 1270 based on a plurality of driving waypoints in an intersection region, in response to a target vehicle 1210 passing the intersection region based on the driving plan 1270.

At an intersection where two or more roads meet or cross, the device to control a longitudinal velocity of a vehicle determines the region of travel 1251 based on the driving plan 1270.

As shown in FIG. 12, in response to the driving plan 1270 being identified as a left turn, the device to control a longitudinal velocity of a vehicle obtains driving waypoints corresponding to the driving plan 1270. In an example in which a map database includes center waypoints of all the roads crossing at the intersection, the device to control a longitudinal velocity of a vehicle selects driving waypoints 1260 corresponding to the driving plan 1270 from among driving waypoints generated by adding an offset to the center waypoints. In an example in which a map database includes waypoints before the intersection region and waypoints after the intersection region and does not include waypoints within the intersection region, the device to control a longitudinal velocity of a vehicle generates the driving waypoints 1260 in the intersection region based on the waypoints before and after entering the intersection region according to the driving plan 1270.

The device to control a longitudinal velocity of a vehicle forms virtual lane lines 1255 based on the driving waypoints 1260 selected or generated based on the driving plan 1270. In FIG. 12, the region of travel 1251 corresponds to a region within the virtual lane lines 1255.

The device to control a longitudinal velocity of a vehicle adjusts a velocity of the target vehicle 1210 based on a distance to a preceding object 1220 within the region of travel 1251, a position of the preceding object 1220, and a velocity of the preceding object 1220.

Although a portion of the preceding object 1220 is detected in the region of travel 1251, the device to control a longitudinal velocity of a vehicle adjusts the velocity of the target vehicle 1210 based on the velocity of the preceding object 1220, the position of the preceding object 1220, and the distance to the preceding object 1220. In an example in which the preceding object 1220 is entering a driving lane in which the target vehicle 1210 is currently travelling from an adjacent lane, the device to control a longitudinal velocity of a vehicle detects a portion of the preceding object 1220 on the driving lane, and adjusts the velocity of the target vehicle 1210 in view of the detected preceding object 1220.

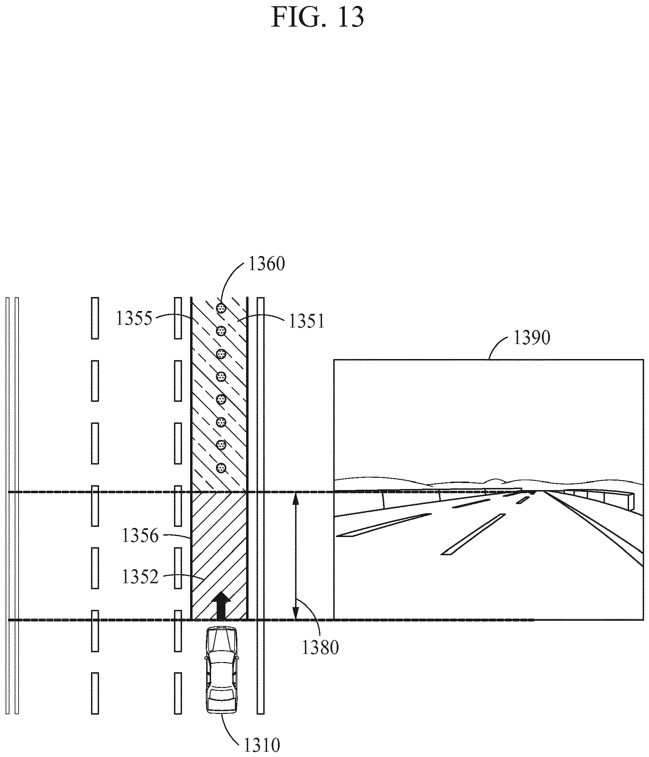

FIG. 13 illustrates an example of detecting a preceding object based on driving waypoints and a front-view image analysis.

Weather and lighting conditions may cause an error in camera-based lane line detection. The camera-based lane line detection has difficulties in accurately fitting lane lines to a distance required to determine a safe velocity in view of a preceding vehicle using polynomial expressions with respect to a winding road. A device to control a longitudinal velocity of a vehicle stably detects a region of travel with respect to various weather environments and road alignments, by mixing the camera-based lane line detection and lane line detection based on waypoints of map data.

For example, the device to control a longitudinal velocity of a vehicle determines a region of travel 1352 of a target vehicle 1310 based on a front-view image 1390 of the target vehicle 1310 with respect to a region within a predetermined distance 1380 from the vehicle 1310. The device to control a longitudinal velocity of a vehicle identifies lane lines 1356 from the front-view image 1390 of the vehicle 1310, and segments a region corresponding to each lane. The device to control a longitudinal velocity of a vehicle determines the region of travel 1352 based on the segmented region corresponding to each lane.

Further, the device to control a longitudinal velocity of a vehicle determines a region of travel 1351 based on a plurality of driving waypoints 1360 with respect to a region beyond the predetermined distance 1380 from the vehicle 1310. The device to control a longitudinal velocity of a vehicle determines the region of travel 1351 by extending a region having a predetermined width based on the driving waypoints 1360 in a direction in which the driving waypoints 1360 are arranged.

Furthermore, the device to control a longitudinal velocity of a vehicle determines the whole region 1351, 1352 of travel by matching the lane lines 1356 defining the region of travel 1352 within the predetermined distance 1380 and lane lines 1355 defining the region of travel 1351 with respect to the region beyond the predetermined distance 1380.

Thus, the device to control a longitudinal velocity of a vehicle accurately recognizes the lane lines 1356 using the front-view image 1390 of the vehicle 1310 with respect to a distance close to the vehicle 1310, and accurately estimates the region of travel 1351 corresponding to a lane using waypoints of a map database with respect to a distance far from the vehicle 1310. The device to control a longitudinal velocity of a vehicle accurately estimates the whole region 1351, 1352 of travel to which the vehicle 1310 is to proceed, thereby safely adjusting a longitudinal velocity of the vehicle 1310.

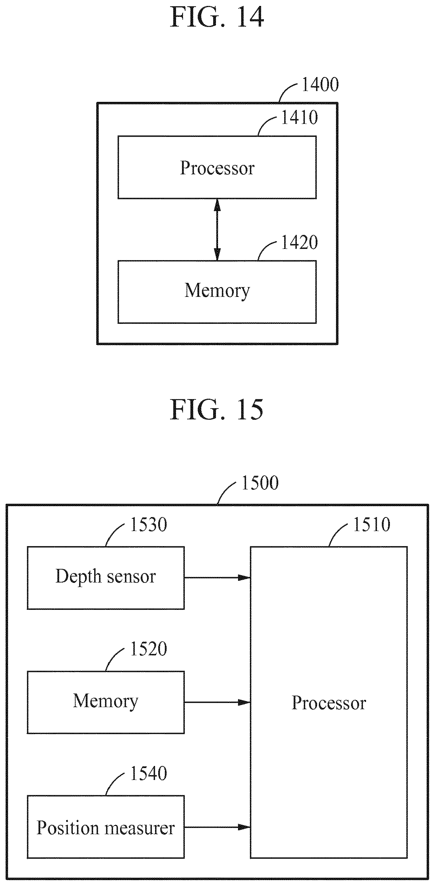

FIGS. 14 through 16 are block diagrams illustrating examples of configurations of devices to control a longitudinal velocity of a vehicle.

FIG. 14 illustrates a configuration of a device 1400 to control a longitudinal velocity of a vehicle.

Referring to FIG. 14, the device 1400 to control a longitudinal velocity of a vehicle includes one or more processors 1410 and one or more memories 1420.

The one or more processors 1410 calculates a region of travel based on a plurality of driving waypoints obtained from a map database, and adjusts a longitudinal velocity of a target vehicle based on a distance to a preceding object in the region of travel. For example, the one or more processors 1410 performs the operations described with reference to FIGS. 1A through 13.

The memory 1420 stores the map database. The memory 1420 semi-permanently or temporarily stores the map database. Depending on a design, a definition of map data stored in the map database varies. For example, depending on the definition, the map data includes waypoints of all lanes, waypoints of a portion of the lanes, or only waypoints with respect to a center line. Further, an interval to designate the waypoints also varies.

The one or more processors 1410 also interpolate a plurality of center waypoints obtained from the map database. The one or more processors 1410 interpolate waypoints included in SD map data, thereby obtaining more definite waypoints.

FIG. 15 illustrates an example of an additional configuration of a device to control a longitudinal velocity of a vehicle.

Referring to FIG. 15, a device 1500 to control a longitudinal velocity of a vehicle includes one or more processors 1510, a memory 1520, a depth sensor 1530, and a position measurer 1540.

The one or more processors 1510 and the memory 1520 are configured as described with reference to FIG. 14.

The depth sensor 1530 measures distances from a vehicle to objects in front of, and in a vicinity of, the vehicle. The depth sensor 1530 includes a radio detection and ranging (RADAR) and a light detection and ranging (LIDAR). The depth sensor 1530 generates distance information indicating the distances to the objects in front of, and in the vicinity of, the vehicle.

The one or more processors 1510 use distance information related to a preceding object detected in a region of travel, among the distance information measured by the depth sensor 1530. However, examples are not limited thereto. The one or more processors 1510 may control the depth sensor 1530 to measure a distance to an object with respect to only the region of travel.

The position measurer 1540 measures position information indicating a current position of the vehicle in map data included in a map database. For example, the position measurer 1540 may include a GPS module.

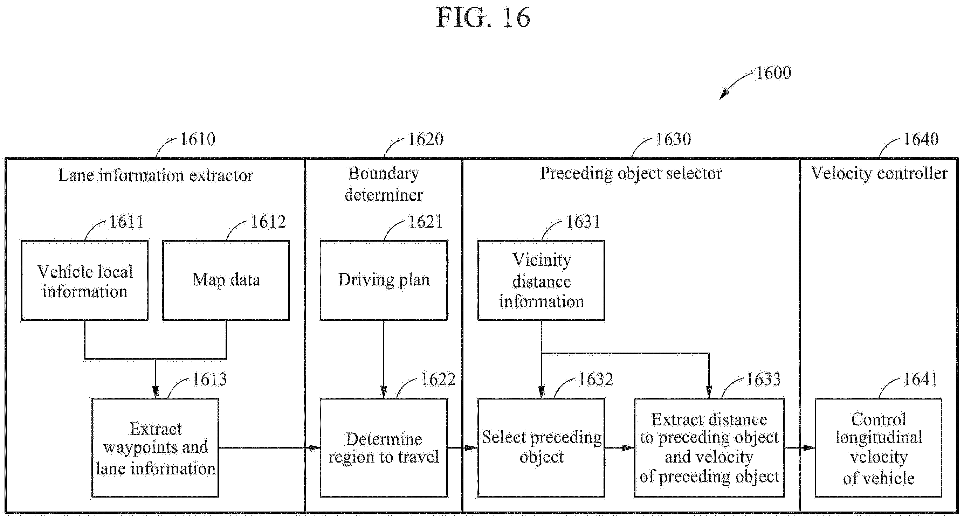

FIG. 16 illustrates an example of a configuration of a device to control a longitudinal velocity of a vehicle.

The operations in FIG. 16 may be performed in the sequence and manner as shown, although the order of some operations may be changed or some of the operations omitted without departing from the scope of the illustrative examples described. Many of the operations shown in FIG. 16 may be performed in parallel or concurrently. One or more blocks of FIG. 16, and combinations of the blocks, can be implemented by special purpose hardware-based computer that perform the specified functions, or combinations of special purpose hardware and computer instructions. In addition to the description of FIG. 16 below, the descriptions of FIGS. 1-15 are also applicable to FIG. 16, and are incorporated herein by reference. Thus, the above description may not be repeated here.

Referring to FIG. 16, a device 1600 to control a longitudinal velocity of a vehicle includes a lane information extractor 1610, a boundary determiner 1620, a preceding object selector 1630, and a velocity controller 1640. As a non-limiting example, the velocity controller 1640 may be representative of the accelerometer of the target vehicle 111, 112 (FIGS. 1A and 1B).

In operation 1613, the lane information extractor 1610 extracts waypoints and lane information based on vehicle local information 1611 and map data 1612. The lane information extractor 1610 extracts, from the map data 1612, waypoints of a point corresponding to the vehicle local information 1611 indicating a position and a heading direction of the vehicle and the lane information.

In operation 1622, the boundary determiner 1620 determines a region of travel based on a driving plan 1621. The boundary determiner 1620 determines the driving plan 1621 based on the vehicle local information 1611. The boundary determiner 1620 sets virtual lane lines based on waypoints corresponding to the driving plan 1621, and determines a region within the virtual lane lines to be the region of travel.

In operation 1632, the preceding object selector 1630 selects a preceding object based on vicinity distance information 1631. The vicinity distance information 1631 is information related to measured distances to objects in a vicinity of the vehicle. The preceding object selector 1630 selects a preceding object currently most adjacent to the target vehicle based on the vicinity distance information 1631. In operation 1633, the preceding object selector 1630 extracts a distance to the preceding object and a velocity of the preceding object.

In operation 1641, the velocity controller 1640 controls a longitudinal velocity of the vehicle. The velocity controller 1640 controls the longitudinal velocity of the vehicle to maintain a predetermined distance to the preceding object. Further, the velocity controller 1640 adjusts the velocity of the target vehicle to be less than or equal to the velocity of the preceding object. In addition, the velocity controller 1640 controls the velocity of the vehicle based on a speed limit for a road on which the vehicle is currently positioned.

The vehicle information extractor 510, waypoint extractor 540, map database 520, and lane detector 530, devices 1400, processor 1410, memory 1420, device 1500, and device 1600, and more particularly, the processor 1510, the memory 1520, the depth sensor 1530, the position measurer 1540 of FIG. 15, the lane information extractor 1610, the boundary determiner 1620, the preceding object selector 1630, and the velocity controller 1640 of FIG. 16, and other apparatuses, devices, and other components described herein with respect to FIGS. 14-16 are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods described and illustrated in FIGS. 1-16 that perform the operations described in this application are performed by computing hardware, for example, by one or more processors or computers, implemented as described above executing instructions or software to perform the operations described in this application that are performed by the method. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the method as described above may be written as computer programs, code segments, instructions or any combination thereof, for individually or collectively instructing or configuring the one or more processors or computers to operate as a machine or special-purpose computer to perform the operations that are performed by the hardware components and the method as described above. In one example, the instructions or software include machine code that is directly executed by the one or more processors or computers, such as machine code produced by a compiler. In another example, the instructions or software includes higher-level code that is executed by the processor or computer using an interpreter. The instructions or software may be written using any programming language based on the block diagrams and the flow charts illustrated in the drawings and the corresponding descriptions in the specification, which disclose algorithms for performing the operations that are performed by the hardware components and the method as described above.

The instructions or software to control computing hardware, for example, one or more processors or computers, to implement the hardware components and perform the method as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A processor-implemented method to control a longitudinal velocity of a target vehicle, the method comprising:
determining a region of travel of the target vehicle based on a plurality of driving waypoints obtained from a map database; and
controlling an adjusting of a longitudinal velocity of the target vehicle based on a distance of the target vehicle to a preceding object in the determined region of travel.

2. The method of claim 1, wherein the calculating comprises:
obtaining lane information and a plurality of center waypoints from the map database; and
determining the driving waypoints based on the lane information and the plurality of center waypoints.

3. The method of claim 1 or 2, wherein the controlling of the adjusting comprises controlling the adjusting of the longitudinal velocity of the target vehicle based on information related to the distance of the target vehicle to the preceding object, a velocity of the preceding object, and an acceleration of the preceding object.

4. The method of any one of the claims 1 - 3, wherein the determining comprises at least one of:
- calculating the region of travel based on a driving plan;
- determining the region of travel to be a region that corresponds to a lane in which the target vehicle is currently travelling, and a region that corresponds to a lane that the vehicle is heading for based on the driving plan
- determining a region that corresponds to a lane in which the target vehicle is currently travelling to be the region of travel.

5. The method of any one of the claims 1 - 4, wherein the adjusting comprises adjusting the longitudinal velocity of the target vehicle based on a distance of the target vehicle to a preceding object adjacent to the target vehicle, among a plurality of preceding objects, when the plurality of preceding objects are in the region of travel.

6. The method of any one of the previous claims, wherein the calculating comprises at least one of:
- interpolating a plurality of center waypoints obtained from the map database;
- determining a region of travel that corresponds to a driving plan based on the plurality of driving waypoints in an intersection region, in response to the target vehicle passing the interaction region based on the driving plan.

7. The method of any one of the previous claims, wherein the calculating comprises:
determining the region of travel based on a front-view image of the target vehicle with respect to a region within a predetermined distance from the target vehicle; and
determining the region of travel based on the plurality of driving waypoints with respect to a region beyond a predetermined distance from the vehicle.

8. The method of any one of the previous claims, further comprising adjusting the velocity of the vehicle based on the controlling of the adjusting of the longitudinal velocity.

9. The method of any one of the previous claims, further comprising:
extracting a plurality of center waypoints from a map database,
determining a curved region of travel of the target vehicle based on the extracted plurality of center waypoints;
detecting a presence of a preceding vehicle within a region of the plurality of center waypoints; and
controlling a longitudinal velocity of the target vehicle based on a determined distance between the target vehicle and the detected preceding vehicle.

10. The method of claim 9, wherein the plurality of center waypoints represents a center line of the determined region, as a determined lane of travel of the target vehicle.

11. The method of claim 9 or 10, wherein the determined region of travel is a region of a predetermined radius around each of the plurality of center waypoints and/or wherein the predetermined radius corresponds to a width of the determined region of travel of the target vehicle.

12. A non-transitory computer-readable storage medium storing instructions that, when executed by a processor, cause the processor to perform the method of any one of the previous claims.

13. An apparatus to control a longitudinal velocity of a vehicle, the device comprising:
a memory configured to store a map database; and
a processor configured to determine a region of travel of the target vehicle based on a plurality of driving waypoints obtained from the map database, and control an adjusting of a longitudinal velocity of the target vehicle based on a distance of the target vehicle to a preceding object in the determined region of travel.

14. The apparatus of claim 13, wherein the processor is configured for at least one of:
- to obtain lane information and a plurality of center waypoints from the map database, and determine the driving waypoints based on the lane information and the plurality of center waypoints;
- to control the adjusting of the longitudinal velocity of the target vehicle based on information related to the distance of the target vehicle to the preceding object, a velocity of the preceding object, and an acceleration of the preceding object;
- to determine the region of travel based on a driving plan;
- to determine the region of travel to be a region that corresponds to a lane in which the target vehicle is currently travelling and a region that corresponds to a lane that the vehicle is heading for based on the driving plan;
- to determine a region that corresponds to a lane in which the target vehicle is currently travelling to be the region of travel;
- to adjust the longitudinal velocity of the target vehicle based on a distance of the target vehicle to a preceding object adjacent to the target vehicle, among a plurality of preceding objects, when the plurality of preceding objects are in the region of travel;;
- to interpolate a plurality of center waypoints obtained from the map database;
- to determine a region of travel that corresponds to a driving plan based on the plurality of driving waypoints in an intersection region, in response to the target vehicle passing the interaction region based on the driving plan.

15. The apparatus of claim 13 or 14, wherein the apparatus is the vehicle, and the apparatus further comprises an accelerometer configured to adjust the longitudinal velocity based on an adjustment of the distance of the target vehicle to the preceding object in the region of travel.
